# EUROPEAN PATENT APPLICATION

(11) **EP 2 402 802 A1**
(43) Date of publication of application: **04.01.2012**
(21) Application number: 11250540.9
(22) Date of filing: 20.05.2011
(51) Int. Cl.: G02B 6/255, G02B 6/44

(54) **System and method for performing and protecting hybrid line Splices**

(30) Priority: 21.05.2010 US 784814
(71) Applicant: Schlumberger Holdings Limited, Tortola (VG)
(72) Inventor: Rubenstein, Scott a., League City Texas 77573 (US); Meyyapan, Ramaswamy, Katy Texas 77450 (US)
(74) Representative: Bailey, Richard Alan

(57) **Abstract**

A method for providing a protected splice in a hybrid cable that has a fiber optic line (25, 35) and an electrical line (30, 40) includes the steps of providing a mechanical optic splice (45) in the fiber optic line; providing an electrical splice (50) in the electrical line proximate to the optic splice (45); providing a jacket (55) over the optic splice (45); installing a boot (70) over the electrical splice; disposing the jacket (55) and the boot (70) in a slotted sleeve (75); positioning the slotted sleeve (75) within a housing (85); and anchoring the housing (85) to the hybrid cable on opposing sides of the splices (45, 50).

## Description

### FIELD OF THE INVENTION

The subject matter of the present invention relates to splicing and protecting hybrid communication lines from the surrounding environment.

### BACKGROUND

Communication lines are used in a wide range of applications in the oilfield industry. The communication lines transmit monitored data regarding downhole conditions such as temperature and pressure to surface instrumentation. The communication lines can also be used to send information down the well from the surface. Additionally, communication lines may also be used to electrically power downhole equipment. Communication lines may include electrical conduits, optical fibers, hydraulic lines and other methods for data or power transmission. Hybrid cables may include multiple types of communication lines in the same cable package, e.g., both electrical conductors and optical fibers.

In environments such as those encountered in downhole wells, the communication lines are exposed to hostile conditions such as elevated temperatures and pressures. To protect the fragile communication lines from the hostile conditions, the communication lines are generally carried within protective tubing that provides an environmental seal. Problems arise when the seal must be broken during assembly, installation and/or repair of the communication line. For example, in downhole applications, in order for the communication line to be fed through production equipment such as packers, the line must be cut and then spliced with the downstream line. Thus, after splicing, the communication line must once again be sealed from the harsh environment.

Hybrid cables may contain multiple optical fibers that may need to be spliced. For example, conventional fusion splicing requires each optical fiber to be separately prepared (e.g., cutting to length, stripping the buffer material, cleaving, cleaning, etc.) and then separately fusion spliced. Each fusion splice multiplies the time it takes to complete the assembly, often at the expense of valuable rig time and adding to the installer's fatigue, which increases the installation risk. Moreover, in space restricted packaging configurations, such as hybrid cables, the individual spliced fibers typically need to be kept to near identical lengths. Therefore, all the individual fusion splices need to be successful (e.g., free of flaws and with low optical loss), or otherwise all the fibers will need to be restored to the same length, thereby necessitating breaking any previously successful splices. In addition to the lost time, the process of redoing the splices may move the position of the assembly to the detriment of the completion design, or even result in insufficient cable length to complete the assembly. Furthermore, conventional fusion splicing does not allow for repeated connection and disconnection once the fusion splices have been made. In addition, conventional fusion splicing requires electrical equipment for installation, which introduces a spark hazard when working in hazardous environments.

Therefore, there is a need for a method of splicing hybrid cables and an apparatus for protecting the hybrid splice from the surrounding environment.

### SUMMARY OF THE INVENTION

In view of the foregoing and other considerations, embodiments of the present invention relates to methods and apparatus for performing a hybrid cable splice and for protecting the splice from the downhole environment and mechanical stresses.

An embodiment of a method for providing a protected splice in a hybrid cable that has a fiber optic line and an electrical line includes the steps of providing a mechanical optic splice in the fiber optic line; providing a electrical splice in the electrical line proximate to the mechanical optic splice; providing a jacket over the mechanical optic splice; installing a boot over the electrical splice; disposing the jacket and the boot in a slotted sleeve; positioning the slotted sleeve within a housing; and anchoring the housing to the hybrid cable on opposing sides of the splices.

An embodiment of a method for providing a protected splice in a hybrid cable in a wellbore environment, wherein the hybrid cable has a fiber optic line and an electrical line includes the steps of connecting the hybrid cable to a tubing for positioning in a wellbore; providing a mechanical optic splice in the fiber optic line; providing a electrical splice in the electrical line proximate to the mechanical optic splice; providing a jacket over the mechanical optic splice; installing a boot over the electrical splice; disposing the jacket and the boot in a slotted sleeve; positioning the slotted sleeve within a housing; hydraulically sealing the housing about the hybrid cable; and anchoring the housing to the hybrid cable on opposite sides of the splices.

An embodiment of an assembly for use in a wellbore includes a hybrid cable having a fiber optic line and an electrical line, the fiber optic line having a mechanical optical splice and the electrical line having an electrical splice; a jacket secured over the optic splice; a boot secured over the electrical splice; a slotted sleeve containing the jacket and the boot; a housing containing the slotted sleeve; and means for anchoring the housing to the hybrid cable on opposing sides-of the splices.

The foregoing has outlined the features and technical advantages of embodiments of the present invention in order that the detailed description of illustrative embodiments of the invention that follows may be better understood. Additional features and advantages of the invention will be described hereinafter which form the subject of the claims of the invention.

### BRIEF DESCRIPTION OF THE DRAWINGS

The foregoing and other features and aspects of the present invention will be best understood with reference to the following detailed description of a specific embodiment of the invention, when read in conjunction with the accompanying drawings, wherein:

**Figure 1** is a -partial cross-sectional view of an embodiment of a hybrid line splice assembly of the present invention;

**Figure 2** is partial cross-sectional view an embodiment of a hybrid line splice assembly including a transfer tube;

**Figure 3** is a schematic of an embodiment of a downhole system using a downhole hybrid line splice assembly of the present invention;

**Figure 4** is a schematic of an embodiment of a hybrid line splice assembly of the present invention positioned on a section of production tubing; .

**Figure 5** is a schematic of an embodiment of a workstation for forming a hybrid cable splice of the present invention; z

**Figure 6** is an illustration of a step in an embodiment of a method of providing a hybrid line splice of the present invention;

**Figure 7** is an illustration of another step in an embodiment of a method of providing a hybrid line splice of the present invention;

**Figure 8** is an illustration of another step in an .embodiment of a method of providing a hybrid line splice of the present invention;

**Figure 9** is an illustration of another step in an embodiment of a method of providing a hybrid line splice of the present invention;

**Figure 10** is an illustration of another step in an embodiment of a method of providing a hybrid line splice of the present invention;

**Figure 11** is an illustration of another step in an embodiment of a method of providing a hybrid line splice of the present invention;

**Figure 12** is an exploded view of portion of an embodiment of a hybrid line splice of the present invention;

**Figure 13** is an illustration of another step in an embodiment of a method of providing a hybrid line splice of the present invention; and

### DETAILED DESCRIPTION

Refer now to the drawings wherein depicted elements are not necessarily shown to scale and wherein like or similar elements are designated by the same reference numeral through the several views. ' '

As used herein, the terms "up" and "down"; "upper" and "lower"; and other like terms indicating relative positions to a given point or element are utilized to more clearly describe some elements of the embodiments of the invention. Commonly, these terms relate to a reference point as the surface from which drilling operations are initiated as being the top point and the total depth of the well being the lowest point.

In the following detailed description of the subject matter of the present invention, the apparatus and method of protecting and performing splices for hybrid lines is principally described with reference to downhole well applications. In addition to downhole well applications, the present invention can be used with any number of applications such as pipeline monitoring, subsea well monitoring, and data transmission, for example. '

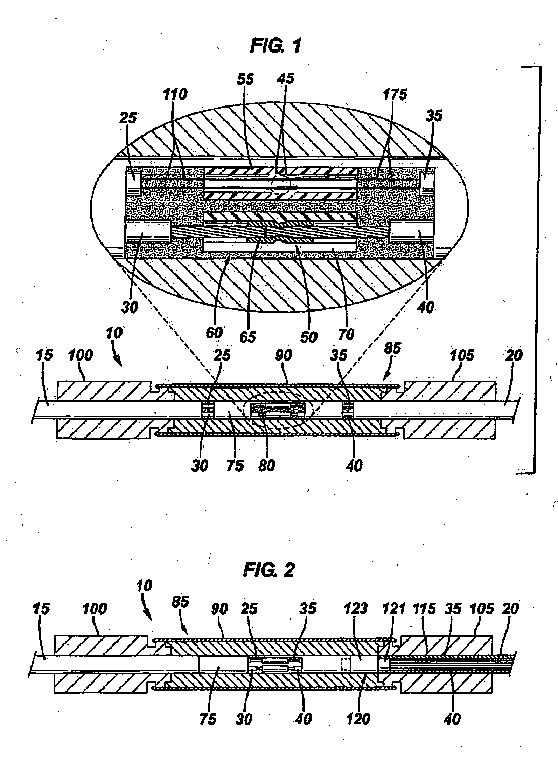

FIG. 1 is a cross-sectional view of an embodiment of a hybrid line splice assembly for protecting a hybrid line splice, generally denoted by numeral 10, of the present invention. A hybrid line may need to be spliced, either by design or pursuant to repairing a damaged communication line or downhole component. Hybrid line splice assembly 10 protects these splices from the mechanical and thermal loads occurring during and after installation and isolates the splices from the downhole environment to ensure that the communication lines function properly. For example, for a typical hybrid line comprising optical fibers and electrical conductors, the splices must be protected to ensure that optical continuity and specified optical insertion losses are maintained, as well as electrical continuity and insulation resistance of the copper conductor.

Hybrid lines 15 and 20 each include at least two different types of communications lines. Hybrid lines 15 and 20 may be hybrid cables or transfer tubes, for example. In the following detailed description, first hybrid line 15 includes a first communication line 25 comprising a first fiber optic communication line and a second communication line 30 comprising a first electrical conductor communication line. Similarly, second hybrid line 20 includes a third communication line 35 comprising a second fiber optic communication line and a fourth communication line 40 comprising a second electrical conductor communication line.

Fiber optic communication lines 25 and 35 include one or more optical fibers 110 and 175, respectively. Fiber optic communication lines 25 and 35 may comprise a loose tube design, for example. The fiber overstuff afforded by a loose tube design may prevent optical fiber strain from differential thermal expansion between optical fibers 110 and 175 and the remainder of lines 25 and 35, and therefore may preclude the necessity of anchoring the optical fibers 110 and 175. This may reduce the complexity of assembly 10 and may eliminate a potential source of increased attenuation or fiber breaks from using setting compounds for fiber anchoring.

As shown in FIG. 1, first hybrid line 15 is spliced to second hybrid line 20 to form a single hybrid cable or line. Optic fibers 110 and 175 are mechanically coupled via first splice 45 (which may comprise multiple splices of multiple optic fiber pairs). Electrical conductors 30 and 40 are electrically coupled via second splice 50. Hybrid line splice assembly 10 includes mechanical splice optical fiber connector or jacket 55 to create, house and protect fiber optic mechanical splices 45, e.g., to minimize shock, vibration, abrasion damage or bending that could either cause optical losses our break. During the mechanical splicing process, optical fibers 110 and 175 are positioned through mechanical splice optical fiber connector 55. Mechanical splice optical fiber connector 55 allows the user to align and either directly contact optical fibers 110 and 175 against each other or via an intermediate connection where optical fibers 110 and 175 are in direct contact with a pre-prepared fiber contained within mechanical splice optical fiber connector 55. An index matching gel may be used in either type of mechanical splice. Mechanical splice optical fiber connector 55 further secures optical fibers 110 and 175 from moving to complete the mechanical splice of optical fibers 110 and 175. Mechanical optical fiber connector 55 may substantially simultaneously accept multiple individual optic fibers 110, 175 and create several individual mechanical splices 45 in separate optical fibers substantially simultaneously. Mechanical splice optical fiber connector 55 may be of a selected material, size and length to allow connector 55 to be inserted into fiber optic communication line 25 or 35. Once the optical fibers 110 and 175 are mechanically spliced, mechanical splice optical fiber connector 55 serves as a jacket to enclose and secure mechanical splices 45. Accordingly, mechanical splice optical fiber connector 55 facilitates the splicing of multiple optical fibers 110 and 175 and protects and secures mechanical optical fiber splices 45 once the splices are completed. Examples of suitable mechanical splice optical fiber connectors 55 are described in U.S. Patent No. 7,140,787 to Yamauchi et al. and U.S. Patent No. 6,773,167 to Scanzillo.

Hybrid cable splice assembly 10 includes boot assembly 60 to house and protect second splice 50. Second splice 50 may comprise crimp socket 65 to communicatively couple the ends of electrical conductors 30 and 40. Other means of providing a terminal or contact to splice the ends of electrical conductor 30 and 40 may be used. Boot assembly 60 includes electrical splice boot 70 to house and protect crimp socket 65 and thereby protect second splice 50. The materials of boot assembly 60 are preferably selected to minimize the possibility of an electrical short.

Hybrid cable splice assembly 10 includes slotted sleeve or tube 75 to house, anchor and protect the first and second splices 45 and 50. Slotted sleeve 75 is sized to contain both first and second splices 45 and 50, e.g., in length and diameter. Slotted sleeve 75 may hold or contain protective gel 80 to anchor and protect first and second splices 45 and 50. Protective gel 80 may be a gel or fluid operable to provide protection against contaminants,captured inside assembly 10 during its assembly. For example, protective gel 80 may comprise a hydrogen scavenging gel to absorb any hydrogen that may obscure or darken optical fibers 110 and 175. Protective gel 80 may be used to dampen mechanical stresses. For example, slotted sleeve 75 may be filled with Sepigel or similar material.

Hybrid line splice assembly 10 further includes hybrid cable splice (HCS) housing 85 to house and protect slotted sleeve 75. HCS housing 85 may include galvanic protection layer 90 or similar coating to mitigate corrosion. Hybrid line splice assembly 10 includes first seal assembly 100 and second seal assembly 105. Seal assemblies 100 and 105 may be coupled to HCS housing 85 to provide a seal about the ends of HCS housing 85 and secure slotted sleeve. 75. Seal assemblies 100 and 105 substantially limit the exposure of splices 45 and 50 to the downhole environment, e.g., fluids, temperature. Seal assemblies 100 and 105 may locally reduce the outer diameter of hybrid lines 15 and 20, respectively. This restriction may increase the load needed to move communication lines 25, 30, 35 and 40, and thereby provide a form of - anchoring to prevent movement that may damage the first and second splices 45 and 50. Sealing assemblies 100 and 105 may include the sealing assembly disclosed in U.S. Patent No. 6,752,397 to Kohli, et al., such as a redundant metal-metal seal, for example. Sealing assemblies 100 and 105 may comprise an electrical dry-mate connector (EDMC) cable seal assembly, for example.

FIG. 2 is a cross-section view of hybrid line splice assembly 10 wherein second hybrid line 20 comprises a transfer tube 115. Hybrid,line splice assembly 10 houses and protects the splice of hybrid lines 15 and 20 and the connection with transfer tube 115. Unlike conventional hybrid cables, transfer tube 115 typically does not include cable filler material. Thus, hybrid line splice assembly 1 0 includes a novel transfer tube adapter 120. Transfer tube adaptor 1 20 may splice assembly 10 includes a novel transfer tube adapter 120. Transfer tube adaptor 120 may serve as a support for slotted sleeve 75 in place of the cable filler material, for example, and may provide mechanical isolation of communication lines 35 and 40 in order to prevent loads from being transmitted to the splices 45 and 50 (FIG. 1). For example, in the absence of a cable filler, transfer tube 115 may transmit potentially damaging vibration or shock related loads to splices 45 and 50. As shown in FIG. 2, transfer tube adaptor 120 may include a neck portion 121 and an expand region 123 having larger diameter than neck portion 121. Neck portion 121 may be inserted into and received by transfer tube 11 S with expanded region 123 positioned inside of slotted 75. In this manner, slotted sleeve 75 is supported in a manner to protect splices 45 and 50. °

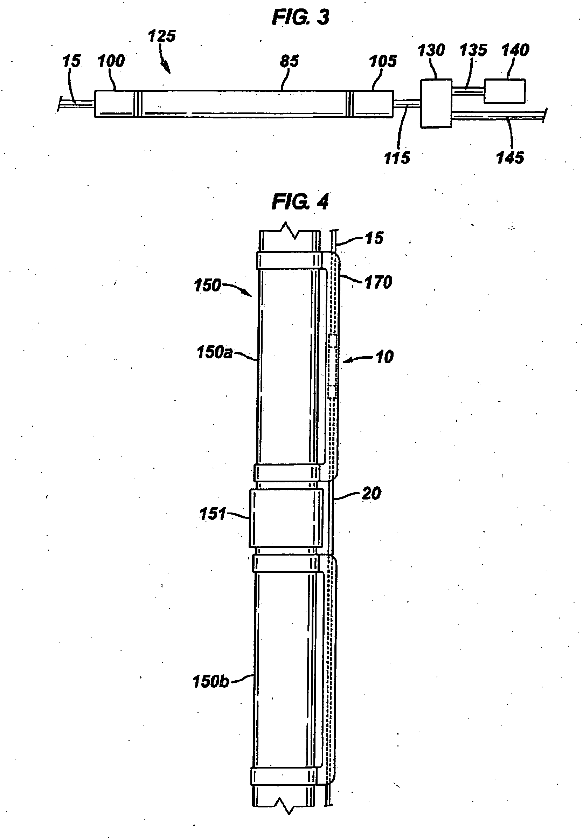

Refer now to FIG. 3, wherein hybrid line splice assembly 10 is utilized to connect the hybrid line 15 to one or more downhole devices positioned below the splices, via transfer tube 115. Electro-optic splitter (EOS) 130, or a similar device, splits electrical conductor 40 via conductor line 135 and fiber optic communication line 35 (FIG. 2) via optical fiber line 145. One or more electronic devices 140, such as electronic gauges, for example, may be connected to electrical conductor(s) 40 via separated conductor line 135. Meanwhile, optical fiber line 145 may continue further along the completion, e.g., further downhole.

FIG. 4 is a schematic illustrating the connection and relative positioning of hybrid line splice assembly 10 on a production or tubing string 150 for positioning in a wellbore.

String 150 includes a first tubing joint 150a and a second tubing joint 150b interconnected at coupling 151. Hybrid cable 15, 20 is connected to tubing 150 with a cross-coupling splice clamp 170 to protect the cable splice while running into the wellbore and against loads on the cable and splice following installation in the wellbore. As illustrated in Figure 4, hybrid cable splice 10 is positioned above tubing coupling 151. however, if a problem occurs with the installation of the hybrid cable splice 10 requiring additional length of the optical fibers, splice assembly 10 can be repositioned below coupling 151 making more fiber length available dowhole by utilizing the cable length that passed over coupling 151.

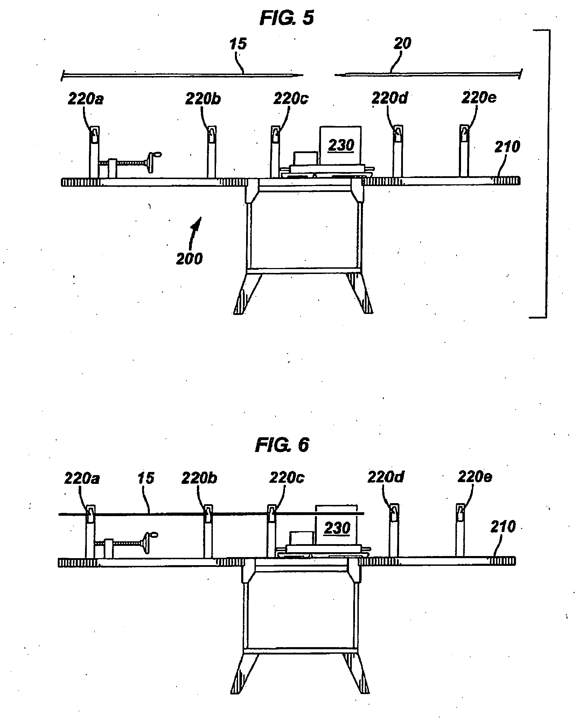

FIGS. 5-13 illustrate an exemplary method for assembling a hybrid line splice assembly. Workstation 200 includes a jig 210 with posts 220a, 220b, 220c, 220d, 220e and optical fiber splicing tool 230 for connecting splicing the optic fibers of first and second hybrid lines 15 and 20 together. Jig 210 may include a tray arranged between the posts 220a, 220b_{;} 220c and the posts 220d, 220e for supporting the splicing device 230 and permitting it to slide into position to perform the fiber splice and back out of position to allow room to work without disturbing the fibers. While the embodiment described herein depicts a horizontally aligned jig, workstation 200 may be configured such that the splice process may be performed in a substantially vertical orientation against the side of the production tubing 1 SO (FIG. 4), to minimize the need for cable slack and workstation space. For example, workstation 200 may include clamps to secure jig 210 directly against the side of the production tubing:

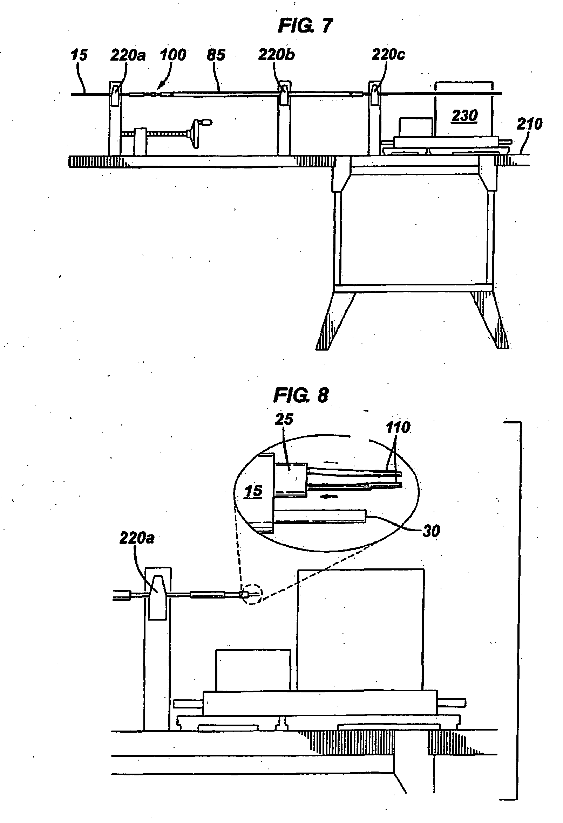

Referring to FIG. 6, first hybrid line 15 is positioned to extend a given length past the inner face of post 220c and is clamped into post 220a. Next, as shown in FIG. 7, first seal assembly 100 and HCS housing 85 are slid onto first hybrid line 15 past post 220c. The HCS housing 85 is held by post 220b with the first hybrid line 15 also held at 220c. If hybrid line 15 comprises a metal cable jacket and cable filler material, these protective layers may then be cut and/or removed a selected distance from the inner face of post 220c to expose communication - lines 25 and 30.

In FIG. 8, optical fibers 110 of first hybrid line 15 are prepared by removing or stripping a selected portion of first communication line 25, e.g., the fiber loose tube, to expose optical fibers 110 for the splicing process.

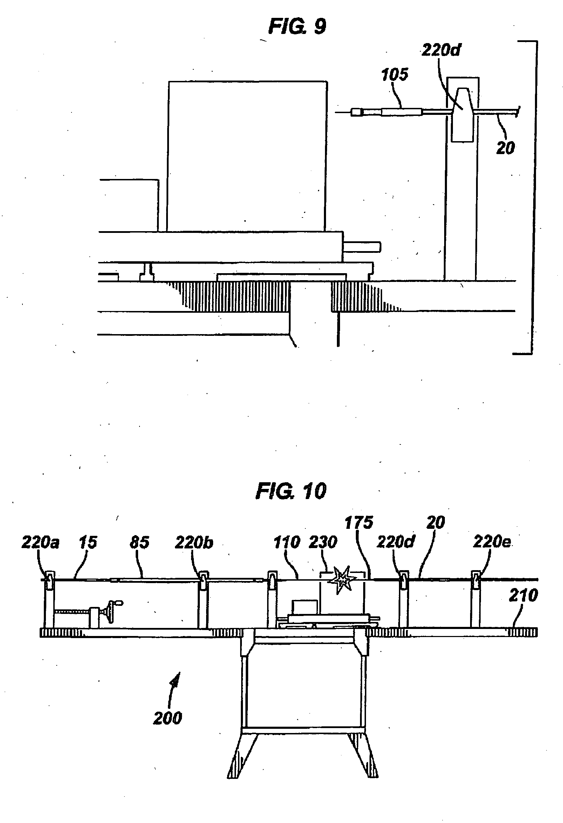

FIG. 9 illustrates the preparation of second hybrid line 20, which may be achieved using similar steps as described above with respect to first hybrid line .15. Second hybrid line 20 is , loaded into position to extend a given length past the inner face of post 220d and is clamped onto post 220e. Second seal assembly 105 is slid onto second hybrid line 20. The metal jacket and filler material (if any) of second hybrid line 20 may be then cut and removed a given distance from the inner face of post 220d.

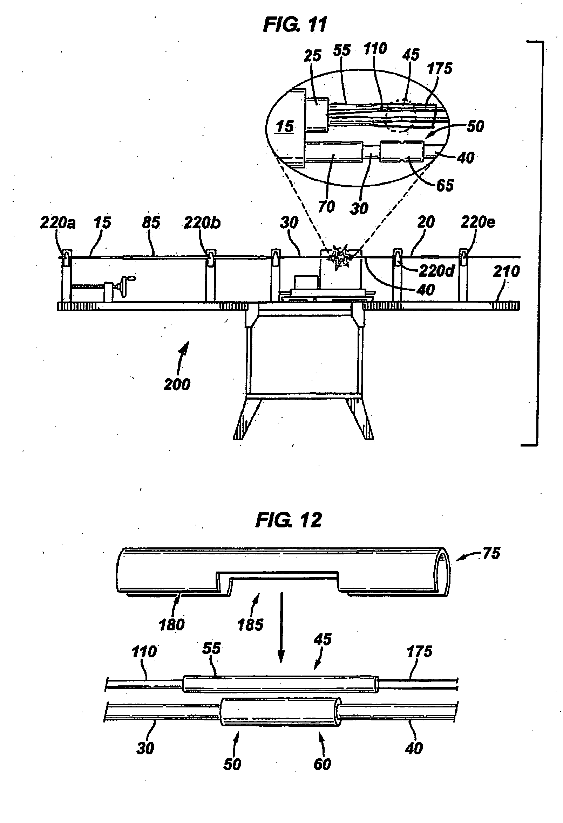

FIG. 10 illustrates the optical fiber mechanical splice. Workstation 200 may include a fiber cleaver (not shown) to cleave optical fibers 110 and/or 175 to substantially identical lengths. The optical fibers 110 and 175 may then be mechanically spliced using optical fiber splicing tool 230 and mechanical splice optical fiber connector 55. An example of a suitable optical fiber splicing tool 230 is described by U.S. Patent No. 7,140,787 to Yamauchi et al. (see, e.g., FIG 11). In another example, a mechanical splice of optical fibers 110 and 175 may be achieved using only mechanical splice optical fiber connector 55 without optical fiber splicing tool 230. For example, a mechanical splice of optical fibers 110 and 175 may be achieved using the mechanical splice optical fiber connector 55 described in U.S. Patent No. 6,773,167 to Scanzillo.

FIG. 11 illustrates an electrical conductor splice. Electrical splice boot 70 is positioned over one of the electrical conductors, 30 or 40, with a sufficient length exposed for splicing. The cut ends of electrical conductors 30 and 40 are then inserted into and communicatively coupled via crimp socket 65. Other means of providing an electrical splice between the electrical conductors 30 and 40 may be used. Once the connection between electrical conductor 30 and 40 has been made, electrical splice boot 70 may be slid over crimp socket 65 to complete boot assembly 60.

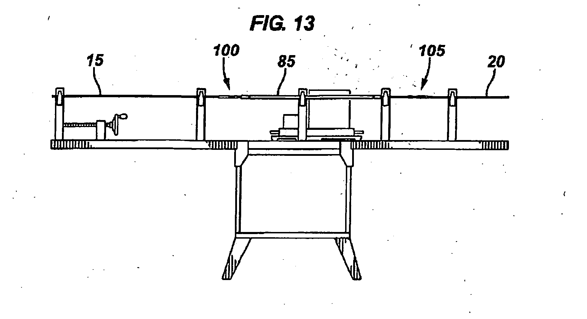

After first and second splices 45 and 50 are made, adjustable jig post 210 is moved outward along the jig to remove slack from the communication lines, but not so much as to put tension on the lines or break the splices 45 and 50. Then, as shown in FIG. 12, slotted sleeve'75 is carefully positioned-over splices 45 and 50. Slotted sleeve 75 may comprise longitudinal slot or channel 180 sized to receive hybrid lines 15 and 20 into slotted- sleeve 75. Slotted sleeve 75 may comprise aperture 185 sized to accommodate fiber optic splice protection sleeve 55 and boot assembly 60. Once slotted sleeve 75 has been positioned over splices 45 and 50, protective gel 80 may be injected into the slotted sleeve 75 to coat or suspend splices 45 and 50. As shown in FIG. 13, HCS housing 85 is then slid over slotted sleeve 75 and secured in a jig post. Seal assemblies 100 and 105 are then made up.

From the foregoing detailed description of specific embodiments of the invention, it should be apparent that an apparatus and method for performing and protecting hybrid line splices that are novel has been disclosed. Although specific embodiments of the invention have been disclosed herein in some detail, this has been done solely for the purposes of describing various features and aspects of the invention, and is not intended to be limiting with respect to the scope of the invention. It is contemplated that various substitutions, alterations, and/or modifications, including but not limited to those implementation variations which may have been suggested herein, may be made to the disclosed embodiments without departing from the spirit and scope of the invention as defined by the appended claims which follow.

## Claims

1. A method for providing a protected splice in a hybrid cable that has a fiber optic line and an electrical line, the method comprising the steps of:
providing a mechanical optic splice in the fiber optic line;
providing a electrical splice in the electrical line proximate to the optic splice;
providing a jacket over the mechanical optic splice;
installing a boot over the electrical splice;
disposing the jacket and the boot in a slotted sleeve;
positioning the slotted sleeve within a housing; and
anchoring the housing to the hybrid cable on opposing sides of the splices.

2. The method of claim 1, wherein the fiber optic line includes a plurality of individual and separate optic fibers, each optic fiber having a mechanical optic splice.

3. The method of claim 1 or 2, further including the step of disposing a gel within the slotted sleeve.

4. The method of claim 1, 2 or 3, wherein the hybrid cable includes a transfer tube and further including the step of interconnecting the transfer tube and the slotted sleeve.

5. The method of claim 4, wherein the transfer tube and the slotted sleeve are interconnected by a transfer adapter.

6. The method of claim 5, wherein the transfer adapter includes a neck inserted into the transfer tube and an expanded-region positioned within and supporting the slotted sleeve.

7. The method of any preceding claim, wherein the housing substantially transfers the axial load on the hybrid cable across the splices.

8. The method of any preceding claim, wherein the step of providing a mechanical optic splice includes providing a plurality of individual mechanical splices in separate optic fibers substantially simultaneously.

9. The method of claim 8, further including the step of disposing a gel within the slotted sleeve.

10. A method for providing a protected splice in a hybrid cable in a wellbore environment, wherein the hybrid cable has a fiber optic line and an electrical line, the method comprising the step of:
connecting the hybrid cable to a tubing for positioning in a wellbore;
providing a mechanical optic splice in the fiber optic line;
providing a electrical splice in the electrical line proximate to the optic splice;
connecting a jacket over the optic splice;
installing a boot over the electrical splice;
disposing the jacket and the boot in a slotted sleeve; _{I} positioning the slotted sleeve within a housing;
hydraulically sealing the housing about the hybrid cable; and
anchoring the housing to the hybrid cable on opposite sides of the splices.

11. The method of claim 10, wherein the hybrid cable includes a transfer tube and further ' including the step of interconnecting the transfer tube and the slotted sleeve via a transfer tube adapter.

12. An assembly for use in a wellbore, the assembly comprising:
a hybrid cable having a fiber optic line and an electrical line, the fiber optic line having a mechanical optical splice and the electrical line having an electrical splice;
a jacket secured over the optic splice;
a boot secured over the electrical splice;
a slotted sleeve containing the jacket and the boot;
a housing containing the slotted sleeve; and
means, for anchoring the housing to the hybrid cable on opposing sides of the splices.

13. The assembly of claim 12, wherein the hybrid cable is connected to the exterior of a tubing.

14. The assembly of claim 12 or 13, further including:
a transfer tube connected to a portion of the hybrid cable; and
an adapter member having a neck portion and an expanded diameter region, the neck portion disposed in the transfer tube and the expanded region disposed within the slotted sleeve.

15. The assembly of claim 12, 13 or 14, wherein the hybrid cable is connected to the exterior of a production string positioned in a wellbore.

16. The method or assembly of any one of claims 10 to 15, wherein the mechanical optic splice comprises a plurality of individual mechanical splices in separate optical fibers performed substantially simultaneously.
